# DEMANDE DE BREVET EUROPEEN

(11) **EP 0 564 368 A1**
(43) Date de publication de la demande: **06.10.1993**
(21) Numéro de dépôt: 93400861.6
(22) Date de dépôt: 02.04.1993
(51) Int. Cl.: G09B 9/05

(54) **Dispositif simple de visualisation pour simulateur de véhicule à cabine de conduite large**

(30) Priorité: 03.04.1992 FR 9204087
(71) Demandeur: THOMSON-CSF, 75008 Paris (FR)
(72) Inventeur: Grandval, Michel, F-92402 Courbevoie Cedex (FR); Viaud, Jean-Michel, F-92402 Courbevoie Cedex (FR)
(74) Mandataire: Chaverneff, Vladimir

(57) **Abrégé**

Le dispositif de visualisation de l'invention comporte un écran (9) disposé verticalement devant la cabine simulée (4) et des projecteurs (21, 22) disposés derrière la cabine, leurs faisceaux passant dans l'espace libre existant entre les deux sièges (5, 6) de la cabine.

Application : simulateur de camion.

## Description

La présente invention se rapporte à un dispositif simple de visualisation pour simulateur de véhicule à cabine de conduite large.

Actuellement, les simulateurs de véhicules se rapportent à des véhicules dont la cabine est relativement étroite : avions, hélicoptères, voitures automobiles particulières. Les projecteurs des dispositifs de visualisation de tels simulateurs sont généralement disposés au-dessus de la cabine, et leurs faisceaux passent à l'extérieur de la cabine.

Si l'on voulait adapter de tels dispositifs de visualisation à des simulateurs de véhicules à cabine large (camions, autocars, locomotives Diesel ou électriques ... ), tout en ayant le même champ de visibilité qu'avec des véhicules réels, ces dispositifs de visualisation seraient très encombrants, et/ou leur inertie serait très élevée et/ou les images projetées seraient déformées.

La présente invention a pour objet un dispositif de visualisation pour un simulateur de véhicule à cabine de conduite large du type précité, dispositif qui soit simple, bon marché, peu encombrant, à relativement faible inertie, et dont les images visualisées ne soient pratiquement pas déformées, tout en offrant le même champ de visualisation que dans la réalité.

Le dispositif de visualisation conforme à l'invention, associé à une cabine large du type à espace central libre, comporte un écran à grand champ disposé devant la cabine et au moins un projecteur disposé en arrière du ou des sièges de la cabine, au moins à proximité de l'axe longitudinal de la cabine.

La présente invention sera mieux comprise à la lecture de la description détaillée d'un mode de réalisation, pris à titre d'exemple non limitatif et illustré par le dessin annexé, sur lequel :
- la figure 1 est une vue de côté d'un dispositif constituant la solution découlant de façon évidente de l'adaptation de solutions connues à la solution du problème de l'invention, et
- les figures 2 et 3 sont respectivement une vue de côté en coupe et une vue de dessus en coupe d'un dispositif conforme à l'invention.

L'invention est décrite ci-dessous en référence à un simulateur de camion, mais il est bien entendu qu'elle n'est pas limitée à une telle application, et peut être mise en oeuvre dans des simulateurs d'autres véhicules à cabine large : autocars, locomotives, ...

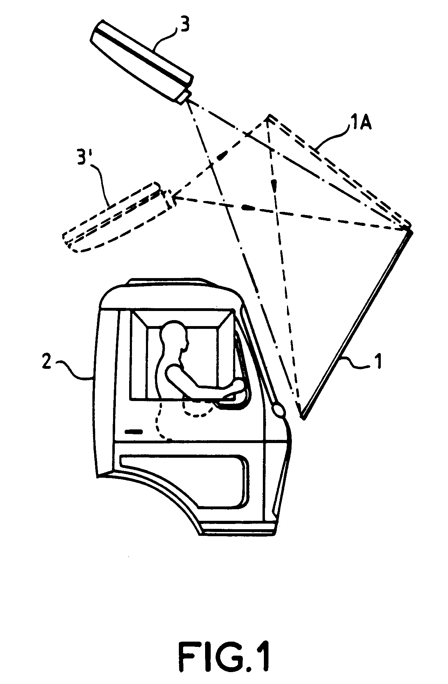

On a schématiquement représenté en figure 1 un dispositif de visualisation pour simulateur de camion, tel qu'il viendrait à l'esprit de l'homme du métier qui se contenterait d'adapter des solutions connues pour des simulateurs de véhicules à cabine étroite (simulateurs d'avions ou de véhicules légers).

Selon une telle solution, on dispose un écran 1 devant la cabine simulée 2 d'un camion. Un ou plusieurs projecteurs 3 sont fixés au-dessus de la cabine 2. Pour diminuer l'encombrement du simulateur et l'inertie des masses en mouvement (la cabine et le dispositif de visualisation sont disposés sur une plateforme, non représentée, mue par des vérins selon des mouvements à plusieurs degrés de liberté), on dispose l'écran 1 le plus près possible de la cabine 2. Pour que l'écran 1 puisse à la fois être vu par le conducteur assis dans la cabine 2 et être illuminé en totalité par les projecteurs 3, il faut que cet écran soit incliné vers l'arrière, comme représenté en figure 1. Les projecteurs 3 doivent alors être fixés très haut au-dessus de la cabine 2. Pour éviter de fixer aussi haut les projecteurs 3, on peut, comme représenté en traits interrompus sur la figure 1, utiliser un miroir de renvoi 1A disposé au-dessus de l'écran 1, les projecteurs occupant alors la position 3'. Cette dernière solution, bien qu'elle permette de diminuer l'encombrement en hauteur du simulateur, nécessite l'emploi du miroir de renvoi 1A dont le poids et le prix sont loin d'être négligeables et dont le mode de fixation est compliqué, et, de toute façon, cette solution oblige à incliner l'écran 1 (c'est-à-dire que la normale à l'écran n'est pas horizontale), ce qui déforme les images vues par le conducteur.

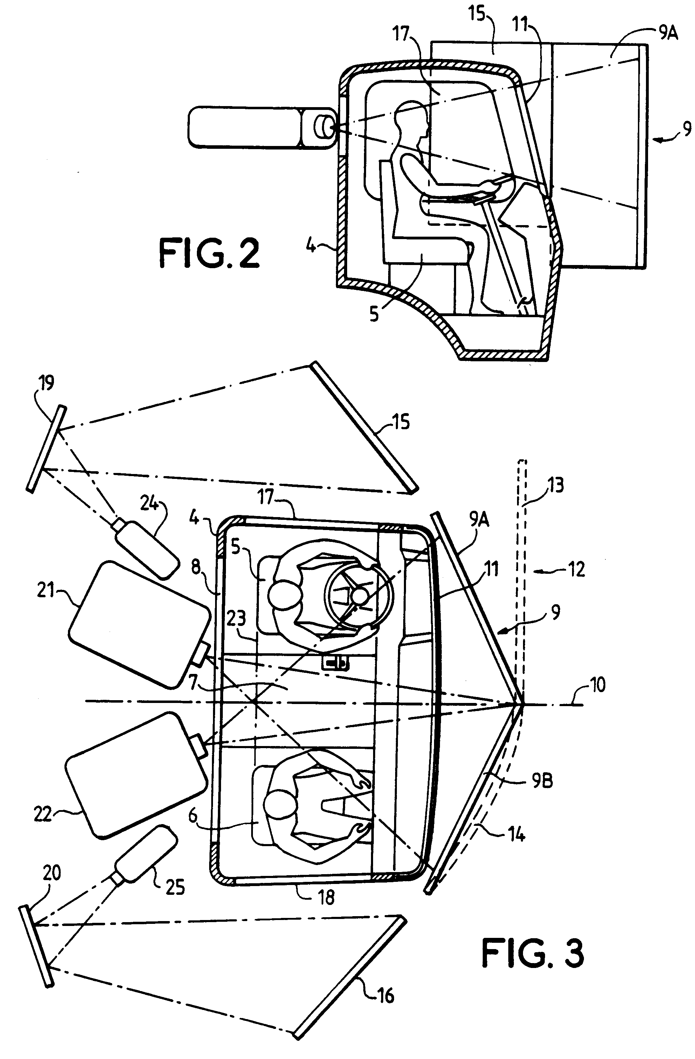

On a représenté en figures 2 et 3 un mode de réalisation du dispositif de visualisation de l'invention. La cabine simulée 4 est disposée sur une plateforme (non représentée) animée de mouvements linéaires (longitudinaux et/ou transversaux et/ou verticaux) et/ou angulaires (roulis et/ou tangage et/ou lacets) de façon connue en soi. La cabine peut être munie ou non du dispositif de suspension du véhicule simulé.

La cabine 4 renferme un siège de conducteur 5 et un siège de passager 6 (par exemple le deuxième conducteur). Ces sièges sont séparés par le capot 7 du moteur du véhicule, dont la hauteur est en général à peu près égale à celle des sièges. Dans certains véhicules, du type à moteur disposé différemment, l'espace entre les sièges peut être soit vide, soit occupé par un troisième siège, ou bien l'on peut avoir une banquette unique occupant toute la largeur de la cabine.

La cabine 4 comporte dans sa cloison verticale arrière, une "lunette" 8 sensiblement rectangulaire, s'étendant sur une grande partie de la largeur de la paroi et de faible hauteur (10 à 20 cm en général), à la hauteur des yeux d'un conducteur moyen.

On dispose devant la cabine 4 un écran principal 9, ayant par exemple la forme d'un dièdre formé de deux plans 9A, 9B dont l'arête passe par l'axe longitudinal 10 de la cabine et qui est disposé symétriquement par rapport à cet axe. L'écran 9 est sensiblement vertical et couvre tout le champ visuel vu par le conducteur et son passager à travers le pare-brise 11 de la cabine.

Selon une variante optimisée vis-à-vis du conducteur, représentée en traits interrompus, l'écran principal 12 également sensiblement vertical comporte une première partie 13, face au conducteur, perpendiculaire à l'axe 10, et une seconde partie 14 légèrement incurvée, qui se confond presque avec le plan 9B, face au passager, qui forme avec l'axe 10 un angle d'environ 60° par exemple, les deux parties 13, 14 se raccordant progressivement entre elles au niveau de l'axe 10. Cette variante est mieux optimisée vis-à-vis du conducteur que l'écran 9, mais n'est pas prévue pour le passager éventuel.

De chaque côté de la cabine 4, on dispose un écran secondaire 15, 16 couvrant en grande partie le champ visuel vu à travers les vitres latérales 17, 18 de la cabine 4. Selon une autre variante, les écrans secondaires sont des prolongements de l'écran principal.

L'écran principal 9 est associé à deux projecteurs principaux 21, 22 disposés en arrière des sièges 5, 6 (en arrière de la ligne 23 joignant les dossiers de ces sièges), à proximité de l'axe 10 et éclairant chacun une des faces de l'écran 9. Ces projecteurs 21, 22 sont disposés symétriquement par rapport à l'axe 10 de façon que leurs faisceaux lumineux respectifs passent dans l'espace compris entre le conducteur et le passager, au-dessus du capot 7. Dans le mode de réalisation représenté sur le dessin, ils sont situés juste derrière la lunette 8. Cependant, leur position peut être différente, la condition à respecter étant qu'ils ne gênent pas au moins le conducteur et que leurs faisceaux ne soient occultés ni par le conducteur ni par son éventuel passager, c'est-à-dire que leurs faisceaux passent dans l'espace compris entre les deux sièges 5, 6. Ainsi, si par exemple la cloison verticale arrière de la cabine ne comporte pas de "lunette", on peut simplement y pratiquer une découpe suffisante pour laisser passer les faisceaux des projecteurs principaux. En variante, si l'espace compris entre la ligne 23 et la cloison arrière de la cabine est suffisamment grand, on peut y disposer ces projecteurs principaux.

Les écrans secondaires 15, 16 sont associés à des miroirs 19, 20 et à des projecteurs secondaires 24, 25 disposés près des coins arrière de la cabine 4.

Bien entendu, tous les écrans précités sont avantageusement des écrans "à gain", c'est-à-dire des écrans présentant dans une certaine direction d'observation un coefficient de réflexion plus élevé que dans toutes les autres directions d'observation.

Bien entendu, tous les vitrages de la cabine (pare-brise, lunette arrière, glaces latérales) ou certains d'entre eux peuvent être supprimés si on le désire.

Il est également bien entendu que les écrans décrits ci-dessus peuvent être remplacés par un écran unique, par exemple sphérique. De plus, on pourrait associer l'écran sphérique à un miroir sphérique (système de visualisation "hors d'axe") afin de collimater les images visualisées, mais cela augmenterait l'encombrement, le poids et le prix du dispositif de visualisation et nécessiterait une optique spéciale pour les projecteurs, ce qui rendrait une telle solution plus onéreuse.

## Revendications

1. Dispositif simple de visualisation pour simulateur de véhicule à cabine de conduite large, du type à espace central libre, caractérisé par le fait qu'il comporte un écran principal (9) à grand champ disposé devant la cabine (4), et au moins un projecteur principal (21, 22) disposé en arrière du ou des sièges (5, 6) de la cabine, au moins à proximité de l'axe longitudinal (10) de la cabine.

2. Dispositif selon la revendication 1, caractérisé par le fait que l'écran principal est disposé sensiblement verticalement.

3. Dispositif selon la revendication 1 ou 2, caractérisé par le fait qu'il comporte des écrans secondaires sur les côtés de la cabine (15, 16) pour la visualisation latérale, et que ces écrans secondaires sont associés à des projecteurs secondaires (24, 25) disposés à l'extérieur de la cabine.

4. Dispositif selon la revendication 3, caractérisé par le fait que des écrans secondaires sont des prolongements de l'écran principal.

5. Dispositif selon l'une des revendications précédentes, caractérisé par le fait que le (les) projecteur(s) principal (principaux) est (sont) disposé(s) à l'extérieur de la cabine et que son (leurs) faisceau(x) lumineux passe(nt) par une ouverture (8) existant ou pratiquée dans la cloison arrière de la cabine.

6. Dispositif selon l'une des revendications 1 à 4, caractérisé par le fait que le(les) projecteur(s) principal (principaux) est (sont) disposé(s) à l'intérieur de la cabine.

7. Dispositif selon l'une des revendications précédentes, caractérisé par le fait que l'écran principal a la forme d'un dièdre (9A, 9B) symétrique par rapport à l'axe longitudinal (10) de la cabine, et qu'il est associé à deux projecteurs (21, 22) disposés symétriquement par rapport à cet axe longitudinal.
